# EUROPEAN PATENT APPLICATION

(11) **EP 1 111 498 A2**
(43) Date of publication of application: **27.06.2001**
(21) Application number: 00310699.4
(22) Date of filing: 01.12.2000
(51) Int. Cl.: G06F 3/06, G06F 13/38

(54) **Converting unit and USB-adapted peripheral apparatus**

(30) Priority: 02.12.1999 JP 34311999
(71) Applicant: Mitsumi Electric Company Ltd., Chofu-shi Tokyo (JP)
(72) Inventor: Matsushima, Jun, c/o Mitsumi Electric Co., Ltd, Chofu-shi, Tokyo (JP); Inenaga, Tatsuya, c/o Mitsumi Electric Co., Ltd, Chofu-shi, Tokyo (JP)
(74) Representative: Moir, Michael Christopher

(57) **Abstract**

Connected to a CD-RW drive (30) having an IDE apparatus interface (31), a speech apparatus output terminal (32), and a power supply apparatus input terminal (33), a converting unit (20) has an IDE unit interface (21), a speech unit input terminal (22), a power supply unit output terminal (23), a USB unit interface (24), a speech unit output terminal (25), and a power supply unit input terminal (26). The converting unit (20) comprises an IDE/USB converting circuit (27) connected between the IDE unit interface (21) and the USB unit interface (24). The IDE/USB converting circuit (27) carries out an interface conversion between an IDE interface and a USB interface. The converting unit (20) further comprises a noise filter (28) connected between the power supply unit input terminal (26) and the power supply unit output terminal (23). The speech unit input terminal (22) is directly connected to the speech unit output terminal (25).

## Description

### Background of the Invention

This invention relates to a converting unit for converting a USB (universal serial bus) unadapted peripheral apparatus into a USB-adapted peripheral apparatus.

In the manner known in the art, electronic equipment such as a personal computer is connected to various peripheral apparatuses (peripheral units). In addition, a universal serial bus (USB) interface has been developed as an interface specification for a personal computer for connecting the peripheral apparatuses. The USB interface aims at commonness of interfaces such as a mouse, a keyboard, a printer, a modem, a speaker, a joystick, and so on, which have individualistic interfaces in the prior art. When a personal computer comprises one USB connector (USB) port, the personal computer may be connected in a star fashion to a maximum of one hundred and twenty-seven of the above-mentioned peripheral apparatuses. By using the USB interface, there are merits as follows: (1) since it is unnecessary to use an add-in board, it is easy for a user which is not familiar to the personal computer to deal with the USB interface; (2) it is possible to reduce the size and weight of a portable personal computer.

In addition, the personal computer called "iMAC" is an example of the personal computers already on the market that contain such a USB interface. The personal computer with a USB port (interface) is hereinafter called a "USB personal computer".

Under the circumstances, various peripheral apparatuses (peripheral units) adapted for use with such USB personal computers have also been put on the market. The peripheral apparatuses adapted to the USB personal computer are hereinafter called "USB-adapted peripheral apparatuses".

On the other hand, in PC-AT computers of the IBM series, an IDE (intelligent drive electronics, integrated drive electronics) interface is known as an interface for a hard disc in the art. The IDE interface is directly connected to an AT (ISA (industry standard architecture)) bus through a forty-pin connector and reads and writes data by directly controlling a controller chip of the hard disc from a system BIOS (basic input/output system) of the personal computer. In addition, the IDE interface is called an ATA (AT attachment) interface.

Furthermore, as a specification for connecting the IDE (ATA) interface with a peripheral apparatus except for the hard disc, such as a CD-ROM (compact disc read-only memory) drive, there is an ATAPI (AT attachment packet interface) interface. In the ATAPI interface, control of the peripheral apparatus is realized by a packeting a command diverting from a SCSI (small computer system interface) interface and by flowing a packeted command in the IDE interface.

The peripheral apparatus enabled to be connected to the IDE interface is hereinafter called an "IDE-adapted peripheral apparatus." In addition, although the CD-ROM drive typifies the IDE-adapted peripheral apparatus, it is noted that the IDE-adapted peripheral apparatus is not restricted to the CD-ROM drive.

Although the CD-ROM drive is an apparatus for accessing a CD (compact disc) disc called a CD-ROM (compact disc read-only memory) disc or for reading data from the CD disc, a CD disc enabling access or a memory device (a recording medium) is not restricted to the CD-ROM.

For instance, one of such recording media comprises a compact disc-recordable (CD-R) disc. The CD-R is an additionally recordable medium which is compatible with the compact disc read-only memory (CD-ROM) disc or a compact disc-digital audio (CD-DA) disc. Although to write information (data) in the CD-R disc requires an exclusive apparatus or a CD-R drive and a writing application, to read the information (data) from the CD-R disc may be carried out by using the CD-ROM drive. Although it is impossible for the CD-R disc to cancel the data once written, it is possible for the CD-R disc to frequently add data.

Although it is impossible for the CD-R disc to cancel the data once written in the manner which is described above, there are CD discs where data can frequently be erased and rewritten. Such CD discs are called compact disc-rewritable (CD-RW) discs. In the CD-RW disc, information (data) is written with a phase change recording therein. However, the CD-RW disc is different from the CD-R disc, since reading data from the CD-RW disc cannot be carried out by using a conventional CD-ROM drive but can be carried out by using a multi-reading CD-ROM drive. In addition, the apparatus enabling access for (or read data from) the CD-RW disc is called a CD-RW drive.

Furthermore, as erasable and rewritable optical discs apart from the CD-RW disc, a digital versatile disc-random access memory (DVD-RAM) disc and a magneto-optical (MO) disc are well-known in the art. In a similar manner as the CD-RW disc, in the DVD-RAM disc, information (data) is written with a phase change recording therein. The MO disc is a disc-shaped optical memory where information (data) is written using a thermomagnetic effect of a magnetic thin film therein and information (data) is read using a photomagnetic effect therefore.

In addition, the above-mentioned SCSI interface is known in the art as one type of the peripheral apparatus interfaces for small computers. The SCSI interface is a parallel I/O bus defined (standardized) by ANSI (American National Standards Institute). In SCSI interface, a controller is provided with the peripheral apparatus side, and the SCSI interface is widely used for connecting a computer with the peripheral apparatus. The peripheral apparatus enabling connection to a SCSI bus is hereinafter called a SCSI-adapted peripheral apparatus.

The peripheral apparatuses except for the USB-adapted peripheral apparatus are called USB-unadapted peripheral apparatuses. The USB-unadapted peripheral apparatuses such as the above-mentioned IDE-adapted peripheral apparatus or the above-mentioned SCSI-adapted peripheral apparatus cannot be connected to the USB personal computer as it is. That is, it is necessary to alter or convert the USB-unadapted peripheral apparatus into the USB-adapted peripheral apparatus by means of some arrangement.

In the manner which is described above, although there is a demand for altering or converting the IDE-adapted peripheral apparatus or the SCSI-adapted peripheral apparatus into the USB-adapted peripheral apparatus, what satisfies this demand has not been proposed up to now.

### Summary of the Invention

It is therefore an object of the preferred embodiments of the present invention to provide a converting unit which is capable with simple structures to convert a USB-unadapted peripheral apparatus into a USB-adapted peripheral apparatus.

Other objects will become clear as the description proceeds.

A converting unit converts a universal serial (USB)-unadapted peripheral apparatus into a USB-adapted peripheral apparatus. The USB-unadapted peripheral apparatus has a particular apparatus interface for interfacing with a particular interface except for a USB interface, a speech apparatus output terminal for outputting a speech signal, and a power supply apparatus input terminal for inputting a power supply.

According to a general aspect of this invention, the above-understood converting unit has a particular unit interface connected to the particular apparatus interface, a speech unit input terminal connected to the speech apparatus output terminal, a power supply unit output terminal connected to the power supply apparatus input terminal, a USB unit interface for interfacing the USB interface, a speech unit output terminal connected to the speech unit input terminal, and a power supply unit input terminal supplied with the power supply. The converting unit comprises a particular interface converting circuit, connected between the particular unit interface and the USB unit interface, for carrying out an interface conversion between the particular interface and the USB interface. The converting unit may also comprise a noise filter connected between the power supply unit input terminal and the power supply unit output terminal.

According to a first aspect of this invention, in the above-understood converting unit, when the particular interface is an intelligent drive electronics (IDE) interface, the particular interface converting circuit comprises an IDE/USB converting circuit. According to a second aspect of this invention, in the above-understood converting unit, when the particular interface converting circuit comprises a SCSI/USB converting circuit. In addition, the USB-unadapted peripheral apparatus may comprise a compact disc rewritable (CD-RW) drive.

### Brief Description of the Drawings

Preferred features of the present invention will now be described, by way of example only, with reference to the accompanying drawings, in which:-
Fig. 1 is a block diagram showing a USB-adapted peripheral apparatus comprising a converting unit according to a first embodiment of this invention; and,
Fig. 2 is a block diagram showing another USB-adapted peripheral apparatus comprising a converting unit according to a second embodiment of this invention.

### Description of the Preferred Embodiment

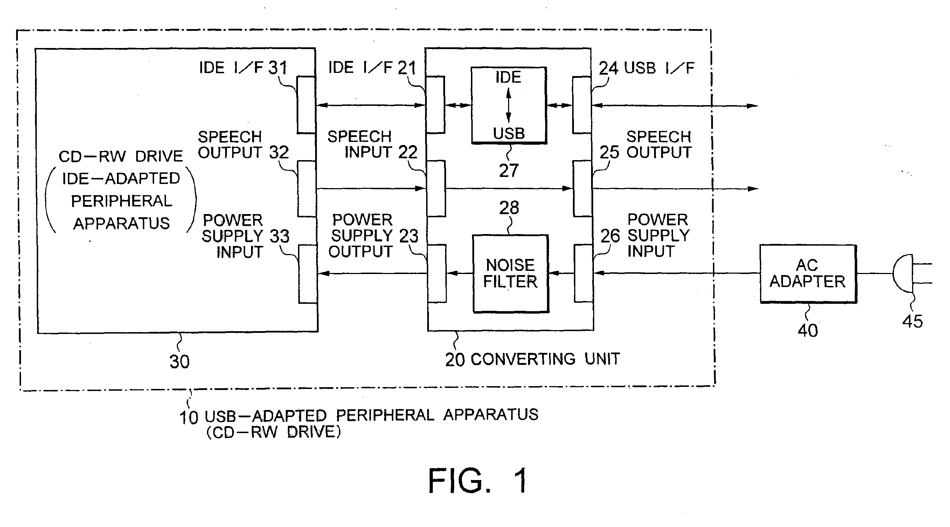

Referring to Fig. 1, the description will proceed to a USB-adapted peripheral apparatus 10 comprising a converting unit 20 according to a first embodiment of this invention. In the example being illustrated, the USB-adapted peripheral apparatus 10 comprises, as a USB-unadapted peripheral apparatus, and IDE-adapted peripheral apparatus 30 which comprises a CD-RW drive.

The CD-RW drive 30 has an IDE apparatus interface 31 for interfacing with an IDE interface, a speech apparatus output terminal 32 for outputting a speech signal, and a power supply apparatus input terminal 33 for inputting a power supply.

The converting unit 20 converts the IDE-adapted peripheral apparatus 30 into the USB-adapted peripheral apparatus 10.

Specifically, the converting unit 20 has an IDE unit interface 21 connected to the IDE apparatus interface 31, a speech unit input terminal 22 connected to the speech apparatus output terminal 32, and a power supply unit output terminal 23 connected to the power supply apparatus input terminal 33.

The converting unit 20 further has a USB unit interface 24 for interfacing a USB interface, a speech unit output terminal 25 connected to the speech unit input terminal 22, and a power supply unit input terminal 26 supplied with the power supply. The power supply unit input terminal 26 is connected to a plug 45 through an AC adaptor 40.

The converting unit 20 comprises an IDE/USB interface converting circuit 27 connected between the IDE unit interface 21 and the USB unit interface 24. The IDE/USB interface converting circuit 27 carries out an interface conversion between the IDE interface and the USB interface. In addition, the converting unit 20 comprises a noise filter 28 connected between the power supply unit input terminal 26 and the power supply unit output terminal 23.

In the manner which is described above, inasmuch as the USB-adapted peripheral apparatus 10 contains the converting unit 20 as well as the IDE-adapted peripheral apparatus (CD-RW drive) 30, the USB-adapted peripheral apparatus 10 is operable as the CD-RW drive which can be connected to a USB personal computer. In addition, in the example being illustrated, a main substrate (not shown) for mounting the IDE/USB converting circuit 27 and a connector substrate (not shown) are implemented by one substrate.

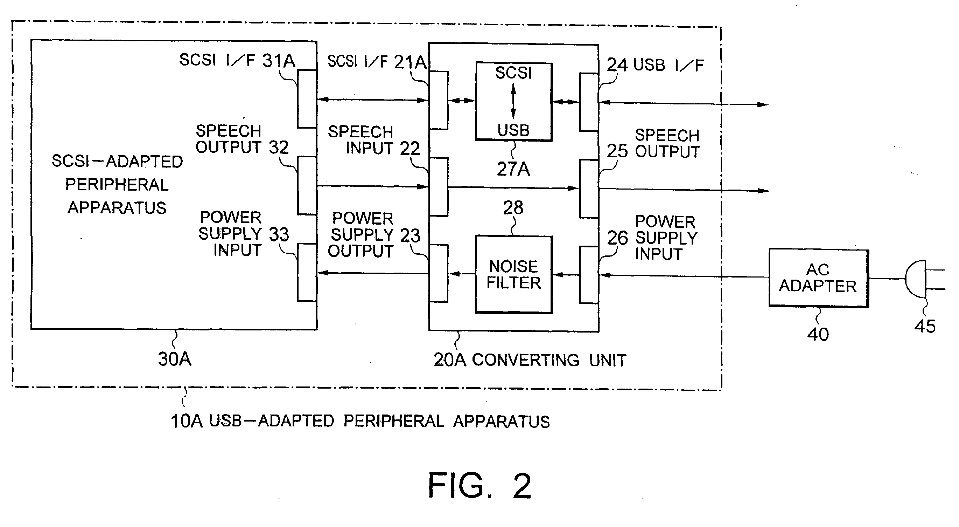

Referring to Fig. 2, the description will proceed to another USB-adapted peripheral apparatus 10A comprising a converting unit 20A according to a second embodiment of this invention. In the example being illustrated, the peripheral apparatus 10A comprises, as a USB-unadapted peripheral apparatus, a SCSI-adapted peripheral apparatus 30A.

The SCSI-adapted peripheral apparatus 30A is similar in structure and operation to the IDE-adapted peripheral apparatus 30 illustrated in Fig.1 except that the SCSI-adapted peripheral apparatus 30A has a SCSI apparatus interface 31A in lieu of the IDE apparatus interface 31.

The illustrated converting unit 20A is similar in structure and operation to the converting unit 20 illustrated in Fig. 1 except that the converting unit 20A has a SCSI unit interface 21A in place of the IDE unit interface and comprises a SCSI/USB converting circuit 27A on behalf of the IDE/USB converting circuit 27.

While this invention has thus far been described in conjunction with preferred embodiments thereof, it is to be understood that modifications will be apparent to those skilled in the art without departing from the scope of the invention. For example, the IDE-adapted peripheral apparatus is not restricted to the CD-RW drive although description is made by exemplifying the CD-RW drive as the IDE-adapted peripheral apparatus in the above-mentioned first embodiment.

Each feature disclosed in this specification (which term includes the claims) and/or shown in the drawings may be incorporated in the invention independently of other disclosed and/or illustrated features.

The text of the abstract filed herewith is repeated here as part of the specification.

Connected to a CD-RW drive having an IDE apparatus interface, a speech apparatus output terminal, and a power supply apparatus input terminal, a converting unit has an IDE unit interface, a speech unit input terminal, a power supply unit output terminal, a USB unit interface, a speech unit output terminal, and a power supply unit input terminal. The converting unit comprises an IDE/USB converting circuit connected between the IDE unit interface and the USB unit interface. The IDE/USB converting circuit carries out an interface conversion between an IDE interface and a USB interface. The converting unit further comprises a noise filter connected between the power supply unit input terminal and the power supply unit output terminal. The speech unit input terminal is directly connected to the speech unit output terminal.

## Claims

1. A converting unit for converting a universal serial bus (USB) unadapted peripheral apparatus into a USB-adapted peripheral apparatus, said USB-unadapted peripheral apparatus having a particular apparatus interface for interfacing with another corresponding interface which is not a USB interface, a speech apparatus output terminal for outputting a speech signal, and a power supply apparatus input terminal for inputting a power supply, wherein:
said converting unit has a particular unit interface connected to said particular apparatus interface, a speech unit input terminal connected to said speech apparatus output terminal, a power supply unit output terminal connected to said power supply apparatus input terminal, a USB unit interface for interfacing said USB interface, a speech unit output terminal connected to said speech unit input terminal, and a power supply unit input terminal supplied with the power supply;
wherein said converting unit comprises:
a particular interface converting circuit, connected between said particular unit interface and said USB unit interface, for carrying out an interface conversion between said particular interface and said USB interface.

2. A converting unit as claimed in claim 1, wherein a noise filter is connected between said power supply unit input terminal and said power supply unit output terminal.

3. A converting unit as claimed in claim 1, wherein said particular interface is an intelligent drive electronics (IDE) interface, said particular interface converting circuit comprising an IDE/USB converting circuit.

4. A converting unit as claimed in claim 1, wherein said particular interface is a small computer system interface (SCSI) interface, said particular interface converting circuit comprising a SCSI/USB converting circuit.

5. A converting unit as claimed in claim 1, wherein said USB-unadapted peripheral apparatus comprises a compact disc rewritable (CD-RW) drive.

6. A universal serial bus (USB) adapted peripheral apparatus, comprising a USB-unadapted peripheral apparatus and a converting unit as in any one of claims 1 to 5 for converting said USB-unadapted peripheral apparatus into said USB-adapted peripheral apparatus.
